# EUROPEAN PATENT SPECIFICATION

(11) **EP 2 520 509 B1**
(45) Date of publication and mention of the grant of the patent: **04.10.2017**
(21) Application number: 11006462.3
(22) Date of filing: 05.08.2011
(51) Int. Cl.: G01M 9/06

(54) **Apparatus for dispensing liquid droplets into a gas flow**
Vorrichtung zum Abgeben von Flüssigkeitstropfen in einen Gasstrom
Appareil de distribution de gouttelettes liquides dans un flux gazeux

(30) Priority: 06.05.2011 US 483379 P
(43) Date of publication of application: 07.11.2012
(73) Proprietor: Airbus Defence and Space GmbH, 85521 Ottobrunn (DE)
(72) Inventor: Thompson, David, Dr., Columbus, MS 39701 (US); Hutchings, Kyle, Houston, TX 77007 (US); Raps, Dominik, Dr., 86633 Neuburg (DE); Jung, Stefan, 8006 Zürich (CH)
(74) Representative: Isarpatent

(56) References cited:
- WO-A1-2010/036352
- WO-A1-2011/004061
- US-A- 3 908 903
- US-A- 5 324 286
- US-A- 5 346 133
- US-A- 5 931 721
- US-A1- 2001 003 148
- US-A1- 2006 185 511
- US-A1- 2008 144 003
- US-A1- 2008 173 327
- US-B1- 6 202 436
- US-B1- 6 444 009

## Description

This invention relates to an apparatus for dispensing liquid droplets into a gas flow, and especially to an apparatus for dispensing super-cooled liquid droplets into an air flow of a wind tunnel. Further the invention relates to a wind tunnel comprising such an apparatus. Wind tunnels as such are well known and used for example in testing aircraft or aircraft parts under realistic flying conditions. For this purpose, wind tunnels comprising means for controlling at least flow velocity and temperature of the related wind tunnel airflow. If effects like rainfall or icing on aircraft or on aircraft parts need to be studied, wind tunnels are commonly providing means for liquid water droplet dispensing. In order to realistically correlate measured wind tunnel data to actual environmental data, the means for liquid water droplets dispensing need to be specifically filling wind tunnel chambers with controlled amounts of liquid water droplets of known droplet size. In this field a wind tunnel droplet dispensing means is known from US 3,087,332 A. This dispensing means comprises a plurality of vertically arranged dispensing members, means for coating the outer surface of said members with liquid, means for controllably vibrating said members, wherein the liquid dispensing members have constricted portions formed in an airfoil configuration and the constricted portions being physically arranged within the wind tunnel such that minimum airflow turbulence is achieved. Further, from JP 04069539 and US 3908903 a liquid particulate generating device for wind tunnel applications is known which enables adjusting particle size distribution depending on use of different droplet generators.

In wind tunnels used for simulating icing and snow fall, liquid water droplets typically at a temperature range of 20 °C to 70 °C are being dispensed into a wind tunnel airflow, which was cooled to temperatures below 0 °C. The liquid water droplets are cooled by said airflow after their release into that airflow to convert into super-cooled liquid droplets. From that, wind tunnels simulating icing conditions, i.e. comprising super-cooled liquid droplets in the airflow, are typically rather large in size due to the long distance between the means for liquid water droplets dispensing and a specimen under examination arranged within a test section of the wind tunnel that is required for adequate cooling of the liquid droplets. Such a wind tunnel with a respective means for liquid water droplets dispensing is disclosed in JP 04070535 A.

The wind tunnels and respective means for liquid water droplet dispensing known in the art can not effectively been used for explicitly studying the physics of single droplet impacts on test specimen, because they do not provide means for liquid water dispensing which produces controlled and repeatable droplet impacts on a test specimen located in the test section of a wind tunnel.

It is an object of the present invention to provide a new and improved apparatus for dispensing liquid droplets into a gas flow, especially into an air flow of a wind tunnel.

It is another object of the present invention to provide an apparatus for dispensing liquid droplets into a gas flow adapted to accurately controlling the quantity and the quality of the liquid droplets being dispensed into the gas flow.

It is still another object of the present invention to provide a new and improved wind tunnel adapted to accurately controlling the quantity and the quality of the liquid droplets being dispensed into the gas flow, and to accurately producing controlled and repeatable droplet impacts on a test specimen located in the test section of a wind tunnel.

The present invention is directed to an apparatus for dispensing liquid droplets into an gas flow according to claim 1. Generally the proposed apparatus for dispensing liquid droplets into a gas flow comprises a liquid droplet producing means and a connected dispensing means. The dispensing means is preferably extending completely (with the length l1) into the gas flow. In the invention the liquid can be any liquid, especially water or water containing liquid solutions. The gas flow can be a flow of any type of gas or mixture of different gases, especially air or inert gases. Those skilled in the art will recognize that there is a wide variety of liquid/gas combinations which may be possible, although for icing wind tunnel applications liquid water and air is preferred.

Liquid droplet producing means are known in the prior art. Some of them are based on piezo-electric induced production of liquid droplets. In this invention a droplet producing means adapted to producing mono-dispersed liquid droplets of controlled droplet size is preferred. The liquid droplet producing means is providing the droplets through an outlet of said means preferable at low droplet speed. The liquid droplet producing means is connected with the dispensing means such that the outlet of the liquid droplet producing means is connected to the tube inlet of a preferably straight and vertically oriented inner tube such that the liquid droplets are being dispensed from said means into the inner tube substantially along a center axis of the inner tube. The inner tube is preferably concentrically arranged inside the outer tube with the first end of the outer tube and the first end of the inner tube being co-located, meaning that the first end of both tubes are at least approximately arranged at the same position along a common centerline.

A droplet entering the inlet of the inner tube will - without wall impacts - pass through the inner tube, leave the inner tube at the outlet of the inner tube, then pass through the remaining length l1 - l2 of the outer tube and leave the outer tube at the outlet of the outer tube into the gas stream. Ideally, a droplet produced by the liquid droplet producing means is passing through the dispensing means following a vertical trajectory until it leaves through the outlet of the outer tube into the gas flow at low droplet speed. The preferably concentrically mounted inner tube inside the outer tube is producing a predominately axial droplet flow reducing undesirable an impact of droplets on the inner wall surfaces of the inner or outer tubes.

The preferably vertically oriented outer tube preferably fully extends into the gas flow. In one advantageous embodiment the volume between the inner tube and the outer tube is being gas tightly closed at the first end of the outer tube. The outer tube also comprises at least one tube-wall-opening being arranged on a downstream side of the outer tube with the tube wall-opening extending along a central axis of the outer tube from a distance d1a to a distance d1b and with both distances d1a, d1b measured relative to the co-located first ends of the inner tube and the outer tube and with d1b < l2. The tube-wall-opening produces an entrainment gas flow into the outer tube and thus a re-circulating flow within the outer tube, wherein gas from the gas flow enters into the outer tube through the tube-wall-opening from the leeward side of the outer tube and proceeds towards the outflow of the outer tube allowing for a mainly turbulence-free release of droplets from the outlet of the outer tube into the gas flow.

In a preferred embodiment of this invention the liquid droplet producing means is configured for producing and dispensing super-cooled liquid droplets at a specified temperature into the dispensing means. Thus, the respective cooling of the liquid droplets to a desired temperature is performed before the droplets being dispensed into the gas flow. Especially icing wind tunnels can be built with a significantly smaller size, because there is no longer the need for a long distance between the means for liquid water droplets dispensing and a specimen under examination arranged within a test section of the wind tunnel that is required for adequate cooling of the liquid droplets.

Preferably the liquid droplet producing means comprising: a liquid droplet generator with an outlet for liquid droplets, a channel having a length 13, a first end and a second end, with the first end of the channel tube being connected to the outlet of the droplet generator such that the liquid droplets being dispensed from the said generator into the channel substantially along a center axis of the channel, and with the second end of the channel being identical with the outlet of the liquid droplet producing means; and cooling means in thermal contact with said channel for cooling said channel. In this embodiment the droplet generator is producing liquid droplets, e.g. at a temperature above 0°C. The droplets are dispensed into the preferably vertically oriented channel at very low speed. Then the droplets are accelerated downwards in the channel mainly based on gravitational forces. The time a liquid droplet at a given size needs from entry into the channel until leaving the channel at the second end depends on the initial velocity of the droplet when entering the channel, gravitational force and droplet mass, which depends on the type of liquid used and droplet size. The channel walls are cooled and thus based on thermal conduction the liquid droplets inside the channel are cooled as well. The cooling of the droplet thus can be adjusted by adjusting the length of the channel and/or adjusting the cooling efficiency of the cooling means. With such a liquid droplet producing means super-cooled liquid droplets can be produced and dispensed into the dispensing means describes above.

In a preferred embodiment, the cooling means comprise a volume encompassing at least a part of an outer surface of said channel, with the volume having an inlet and an outlet, and the volume, the inlet and the outlet being permeable for a cooling medium. For a controlled temperature inside the channel the cooling medium with controlled temperature is pumped through the volume via the inlet and the outlet of the otherwise closed volume at a controlled rate. At a given length l3 of the channel the temperature inside the channel thus can be varied mainly by changing the temperature of the cooling medium.

In a preferred embodiment an area cross-section of the tube-wall-opening equals an area cross-section of the outlet of the outer tube. It has turned out that this relation provides for an optimal reciprocal flow inside the outer tube allowing for minimum turbulence inside the outer tube, minimal droplet impact on the inner wall of the outer tube, especially at a tube section at the second end of the outer tube, and thus for optimal reproducibly dispensing mono-dispersed liquid droplets into the gas flow.

In a preferred embodiment of this invention the inner tube and the outer tube are concentrically arranged along a common vertically arranged central axis. Preferably the geometrical profile of the cross-sections of the outer tube and the inner tube are similar, e.g. circular or elliptical profile. In another embodiment, the geometric profile of the cross-sections of the outer tube and the inner tube are different. In another embodiment, a profile of a cross-section of the outer tube is constant along the center axis of the outer tube. The geometric form of the cross-section of the outer tube preferably has a circular profile or a drop shaped profile or a symmetric shaped airfoil profile or a symmetric shaped NACA airfoil profile. The NACA airfoil profiles are airfoil shapes for aircraft wings developed by the National Advisory Committee for Aeronautics (NACA). The shape of the NACA airfoils is described using a series of digits following the word "NACA." The parameters in the numerical code can be entered into equations to precisely generate the cross-section of the airfoil and calculate its properties. The NACA four-digit wing sections define the profile by: one digit describing maximum camber as percentage of the chord, one digit describing the distance of maximum camber from the airfoil leading edge in tens of percents of the chord, and two digits describing maximum thickness of the airfoil as percent of the chord. For example, the NACA 2412 airfoil has a maximum camber of 2% located 40% (0.4 chords) from the leading edge with a maximum thickness of 12% of the chord. Four-digit series airfoils by default have maximum thickness at 30% of the chord (0.3 chords) from the leading edge. The NACA 0015 airfoil is symmetrical, the 00 indicating that it has no camber. The 15 indicates that the airfoil has a 15% thickness to chord length ratio: it is 15% as thick as it is long. The NACA system is known by those skilled in the art.

In a preferred embodiment of this invention the outer tube comprises two portions, a first portion extending from the first end of the outer tube in direction to the second end until a cross section of the outer tube located at a distance d2 from said first end, wherein the first portion encompassing the tube-wall-opening, and a second portion extending from said cross section to the second end of the outer tube; the second portion comprising a body having a cross section oriented perpendicular to the center axis of the outer body, said cross section being a drop shaped profile, or a symmetric airfoil shaped profile, or a symmetric NACA-shaped profile. Preferred NACA-shaped profiles are: a NACA0020, or a NACA0030, or a NACA 0040 profile.

In a preferred embodiment of this invention, the length l2 of the inner tube is selected from a range: [1.2 * d1b, 5 * d1b], [1.5 * d1b, 3.5 * d1b], or [2 * d1b, 2.5 * d1b] with d1b being a distance measured from to the first end of the outer tube and with d1a < d1b and d1b < l2; and/or the length l1 of the outer tube is selected from a range: [100 mm, 700 mm], [100 mm, 500 mm], [100 mm, 400 mm], [150 mm, 300 mm], or [150 mm, 250 mm] and/or the ratio l2 / l1 is selected from the range: [0.1, 0.7], [0.1, 0.5], [0.1, 0.3], or [0.15, 2.25]; and/or d1a is selected from a range: [0, 50 mm], [0, 25 mm], [0, 10 mm], [0, 5 mm], [1 mm, 3 mm], [2 mm, 2.5 mm]. Those skilled in art will recognize that these preferred dimensions allow construction of relatively small wind tunnels e.g. for studying the physics connected with impact of mono-dispersed super-cooled liquid droplets on test specimen.

Finally this invention is directed to a wind tunnel with an apparatus described above, wherein the apparatus is being arranged at an upper wind-tunnel-wall located upstream of a test section of the wind tunnel with the outer tube extending into the air flow. Preferably the outer tube is being aligned vertically and is fully extending into the airflow with its length l1.

The above-mentioned and other objects, advantages and features for the invention will become more apparent when considered with the following specification and the accompanying drawings wherein:
- Fig. 1: shows a cross-sectional view of an apparatus according to a preferred embodiment of this invention,
- Fig. 2: shows a cross-sectional view of the dispersion means and instantaneous droplet positions for an outer tube without a tube-wall opening in the outer tube,
- Fig. 3: shows a cross-sectional view of the dispersion means and instantaneous droplet positions for an outer tube with a tube-wall opening in the outer tube;
- Fig. 4: shows an intersection of droplet trajectories with a plane parallel with the outlet of the outer tube over a time interval of 0.152 s.

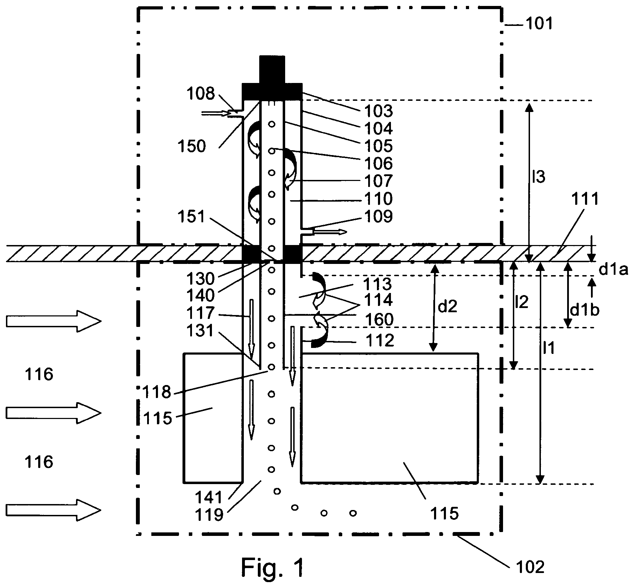

Fig. 1 shows a cross-sectional view of an apparatus according to a preferred embodiment of this invention, which is used in a small-scale icing wind tunnel. The main goal of the presented apparatus is to introduce mono-dispensed super-cooled water droplets 106 into the air flow 116 of a wind tunnel and have them impact on a specimen located in the test section of the wind tunnel (not shown). The droplets 106 are produced and super-cooled by a liquid droplet production means 101 before introduction into the wind tunnel air flow 116 by the liquid droplet dispensing means 102. The liquid droplet dispensing means 102 is designed to introduce the droplets 106 into a settling chamber of the wind tunnel in manner that produces repeatable droplet impacts with a specimen in the test section of the wind tunnel. The liquid droplet production means 101 is arranged outside the wind tunnel settling chamber (in Fig. 1 the part above the wind tunnel wall 111), while the liquid droplet dispensing means 102 is arranged inside the wind tunnel settling chamber (in Fig. 1 the part below the wind tunnel wall 111), thus extending completely into the gas flow 116. Fig. 1 shows the arrangement of the apparatus at the upper wall 111 of the settling chamber of a small scale icing wind tunnel.

The liquid droplet production means 101 comprise a droplet generator 103 to produce mono-dispersed liquid droplets 106 of given size having ambient temperature. The droplets 106 are introduced into a vertically arranged channel 105 which is connected to the outlet of the droplet generator 103 at the first end 150 of the channel 105. In this embodiment, the channel 105 has a circular cross-section and is surrounded by a volume 110 of a cooling means 104, which in the present case is formed by an outer channel also having a circular cross-section. Those skilled in the art will recognize that there are a variety of other geometric forms for the volume 110 of the cooling means 104. The volume 110 of the cooling means 104 has one inlet 108 and one outlet 109 and is otherwise a closed volume. Through the volume 110 a cooling medium is circulated as indicated by the arrows 107. The temperature of the cooling medium controls the temperature of the air inside the channel 105. The cooling of the liquid droplets 106 inside the channel 105 depends on the time the droplets 106 spends inside the channel 105 and the temperature of the air inside the channel 105.

The liquid production means 101 is extending through the wind tunnel wall 111 until the inner surface of the settling chamber and is connected to the liquid droplet dispensing means 102. In Fig. 1 the channel 105 and the inner tube 160 are formed as one continuous inner tube, such that droplets 106 produced by the droplet generator 103 are introduced into this continuous inner tube at the upper end of the cooling channel 105 and leave this continuous inner tube at the second end of the inner tube 160. Further, also the outer channel and the outer tube 112 are formed as a continuous outer tube with their upper end being connected gas tightly to the droplet generator 103, and their lower end being open to the gas flow 116 inside the settling chamber of the wind tunnel. There also is gas tightly blockage (indicated as black areas) between the inner surface of the continuous outer tube and the outer surface of the continuous inner tube co-located to the passing of the wind tunnel wall 111. For those skilled in the art it will be apparent that a variety of other geometries for the channel 105, the cooling means 104, the inner tube 160 and the outer tube 112 exist.

The liquid droplet dispensing means 102 comprise a vertically oriented straight outer tube 112 having a length l1, a first end 140 and a second end 141, the second end 141 comprising a tube outlet 119, a vertically oriented straight inner tube 160 having a length l2 with l2 < l1, a first end 130 and a second end 131, the first end 140 comprising a tube inlet, the second end 141 comprising a tube outlet, wherein the inner tube 160 being arranged inside the outer tube 112 with the outer surface of the inner tube 160 being disposed at distance from the inner surface of the outer tube 112, the first end 140 of the outer tube 112 and the first end 130 of the inner tube 160 being co-located, the outlet 151 of the liquid droplet producing means 101 being connected to the tube inlet of the inner tube 160 such that the liquid droplets 106 being dispensed from the said means 101 into the inner tube 160 substantially along a center axis of the inner tube 160, and the volume between the inner tube 160 and the outer tube 112 being gas tightly closed at the first end 140 of the outer tube 112; and one tube-wall-opening 113 being arranged on a downstream side of the outer tube 112 with the tube wall-opening 113 extending along a central axis of the outer tube 112 from a distance d1a to a distance d1b, both distances d1a, d1b measured relative to the co-located first ends 130, 140 of the inner tube 160 and the outer tube 112 and with d1b < l2 and d1a < d1b.

The embodiment shown in Fig. 1 comprises an outer tube 112 with two portions, a first portion extending from the first end 140 of the outer tube 112 in direction to the second end 141 until a cross section of the outer tube 112 located at a distance d2 from said first end 140, wherein the first portion encompassing the tube-wall-opening 113, and a second portion extending from said cross section to the second end 141 of the outer tube 112, the second portion comprising a body 115 having a cross section oriented perpendicular to the center axis of the body 115, said cross section a symmetric NACA-shaped profile.

The tube wall opening 113 provides a pressure relief that supports the droplets 106 in leaving the inner tube 160. Additionally, the body 115 provides for reducing the wake turbulence downstream the outlet 141 of the outer tube 112. The flow induced inside the outer tube 112 by the tube-wall opening 113 proceeds uniformly from the tube wall opening 113 to the outlet 119 of the outer tube 112, thereby minimizing collisions of the droplets 106 with tube walls and maximizing the number of droplets 106 that exit the outer tube 112. The cross section of the airfoil body 115 reduces wake turbulence and enhances repeatability of droplet impact with the specimen in the test section of the wind tunnel. The resulting closed design is a fully encapsulated droplet delivery system that does not introduce warm air from the outside into the wind tunnel.

The outer tube 112 is not restricted to a circular cross section and may have any shape that facilitates delivery of the droplets 106 so they impact the test specimen. The cylindrical outer tube 112 has a length l1 of 22.5 cm with 22 mm outer diameter. The thickness of the outer tube wall is 2 mm, so that the inner diameter of the outer tube 112 measures 18 mm. The tube-wall opening 113 is located on the downstream side of the outer tube 112 tube near the upper wall 111 of the settling chamber. This design allows air from the leeward side of the outer tube 112 to enter the tube-wall opening 113 and proceed towards the outlet 119 of the outer tube 112 at the second end 141. The tube-wall opening 113 is located 2.5 mm below the upper wall 111 of the wind tunnel settling chamber and measures 36.3 mm tall by 6.74 mm wide. This dimension of the tube-wall opening 113 is selected such that its area is equal to the cross-sectional area of the outer tube 112, especially the cross-sectional area of the outlet 119 of the outer tube 112.

The concentrically mounted inside the outer tube 112 was introduced to produce a predominantly axial flow and reduce the undesirable effects associated with the unsteady flow in the pressure relief tunnel-wall opening 113. The outlet 118 of the inner tube 160 is located 36.2 mm lower than the bottom of the tube-wall opening (at distance d1b from the wind tunnel wall 111) to protect the droplets 106 from the inflow of the tube-wall opening 113, which might adversely affect the droplet trajectories. The inner cylindrically formed tube 160 has a length l2 of 7.5 cm and measures 8 mm in outer diameter. The walls of the inner tube 160 were assumed to have a thickness of 1 mm such that the inside diameter measures 6 mm. The outer diameter of the inner tube 160 is chosen to limit blockage inside the outer tube 112.

A second feature of the outer tube 112 design is its cross-section profile in the vicinity of the second end 141 of the outer tube 112. The presented circular cylinder cross-section design is preferable due to similarity to the liquid droplet producing means 101, but it introduces significant unsteady artifacts to the downstream flow via a turbulent wake. In order to reduce these induced fluctuations in the flow downstream of the outer tube 112, hybrid geometry was introduced that combine a cylinder geometry at an upper part of the dispensing means 102 and an airfoil-shaped collar/body 115 at the lower part of the dispensing mean 102, respectively the lower part of the outer tube 112. The cylindrical cross-section allows an easy incorporation of the tube-wall opening 113 while the airfoil body 115 introduces a more streamlined geometry in critical regions of the wind tunnel air flow 116. Three different NACA-airfoil profiles: NACA0020, NACA0030, and NACA0040 were examined as possible cross-sectional geometries for this hybrid outer tube 112.

During the examination, it was anticipated that the tube-wall opening 113 of the outer tube 112 would encourage a more uniform flow for the droplets 106. For the examination on one hand, the tube-wall opening 113 and the inner tube 160 were removed from the design of the liquid droplet dispensing means 102 and compared with a design of the liquid droplet dispensing means 102 comprising the tube-wall opening 113 and the inner tube 160 to determine the effect of the tube-wall opening 113 on the flow inside the outer tube 112 and its subsequent effect on the droplet trajectories.

The examination showed that the configuration with no tube-wall opening 113 and no inner tube 160 result in a significant region of upward moving flow inside the outer tube 112 close to the outlet 119. The region of downward directed droplet velocity is a magnitude greater and is significantly larger for the configuration with a tube-wall opening 113, also the velocity vectors are more uniform. In addition it was found that in both examined cases there still was a vortex formation close to the outlet 119 of the outer tube 112.

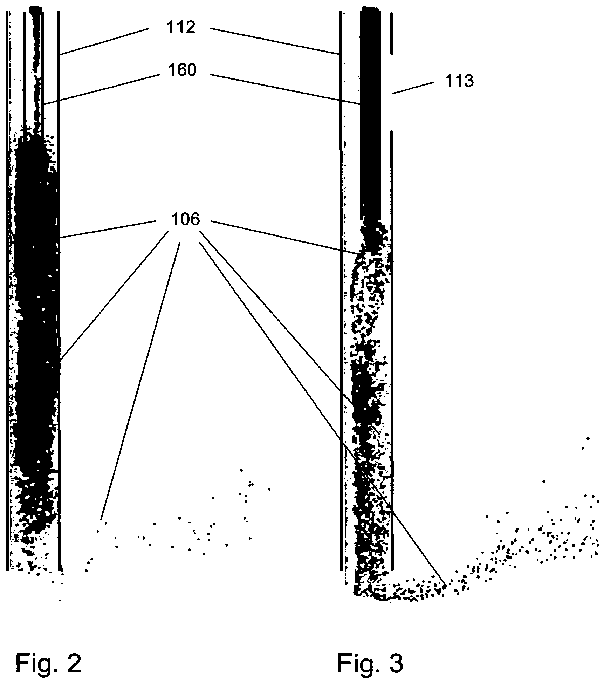

**Fig. 2** shows a cross-sectional view of the dispension means 102 and instantaneous droplet positions for an outer tube 112 without a tube-wall opening 113. The droplets 106 inside the inner tube 160 fall unaffected for some length until adverse vertical air flow in the outer tube 112 reduces the droplet velocities in downward direction, alter their trajectories, and increase the scattering of droplets 106 and their concentration in the outer tube 112.

**Fig. 3** shows a cross-sectional view of the dispension means 102 and instantaneous droplet positions for an outer tube 112 with a tube-wall opening 113 in the outer tube 112. Examination of this configuration shows that the downward directed velocity of the droplets 106 increases as they fall through the outer tube 112. A swirl of droplets 106 in the outer tube 112 is an evidence of residual effects of flow around the inner tube 160. The dispersion of droplets 106 created by the swirling flow does not affect the scatter of droplets 106 as much as the dispersion caused by the adverse flow. More droplets 106 exit the outlet 119 of the outer tube 112.

A further examination of the droplet 106 impact locations inside the outer tube 112 for both above configurations showed that droplets 106 in the outer tube 112 with a tube-wall opening 113 are less likely to impact the wall of the outer tube 112. It is assumed that when a droplet 106 impacts a wall, it is instantaneously removed from the domain. This assumption ignores the possible accretion of ice inside the outer tube 112 over time, if droplet impacts are frequent. Eventually, this accretion may impede the flow from exiting the outer tube 112 thereby preventing droplets 106 from exiting the outer tube 112.

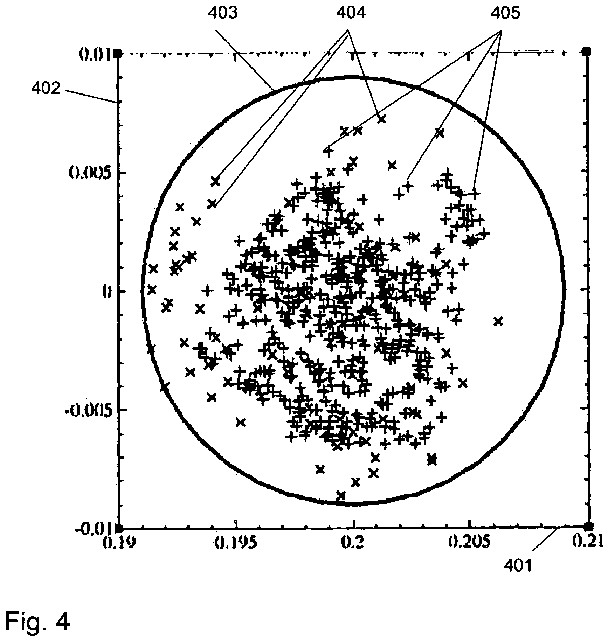

**Fig. 4** shows the scattering of droplets 106 that exit the outlet 119 of the outer tube 112 at intersections of droplet trajectories with an exit plane determined by the x- (401) and y-(402) axis and located at the second end 140 of the outer tube 112 over a time interval of 0.152 s for two configurations of the liquid droplet dispensing means 102. The plane is arranged perpendicular to a longitudinal axis of the outer tube 112. A first configuration is defined as having no inner tube 120 and no tube-wall opening 113, and a second is defined as having an inner tube 120 and a tube-wall opening 113. Intersections 404 for the first configuration are marked with 'x'. Intersections 405 for the second configuration are marked with '+'.

It is clear from Fig. 4 that in the second configuration there are significantly more droplets 106 that exit the outer tube 112 during the given time interval. In the second configuration the droplets that exit further show a more concentrated and centered distribution of impacts on the exit plane. The reference numeral 403 refers to the cross-section of the outlet 119 of outer tube 112. Further examination showed that in the second configuration fewer droplets 106 impact the wall of the outer tube 112 during the time interval. Thus, the dispensing means 102 configured with the second configuration increase the rate of droplets 106 successfully exiting the outer tube 112 during this time interval and decrease the scattering of droplet trajectories in the exit plane.

The cylindrically cross section design of the outer tube 112 tend to scatter droplets 106 that have exit the outlet 119 and tend to deflect them upward due to fluctuating velocity components in the wake of the outer tube 112. Presumably less scatter and therefore more reliable droplet trajectories would be the result of employing a cross section in the lower part of the outer tube 112 that produces less turbulence in its wake. To test this hypothesis, three different NACA-airfoil bodies 115 have been tested in lieu of a circular cross-section of the outer tube 112.

The three different airfoil-shaped collars were installed just below the tube-wall opening 113 on the outer tube 112, so that the favorable effects of the opening 113 and the inner tube 160 could be maintained. The three configurations were based on NACA0020, NACA0030, and NACA0040 airfoil profiles. The thickness of the profile was held constant and the chord of the profile decreased in order to keep the same tube diameter.

Experiments proved that the scatter of trajectories of droplets 106 which have been released from the outlet 119 of the outer tube 112 with an airfoil body 115 have significantly less scatter in the exit plane and in the test section than that of the circular cylinder-shaped outer tube 112. Additionally, the upward shift of the trajectories is minimized using a streamlined symmetric airfoil body 115.

The cylindrical cross-section of the outer tube 112 shows a strong, very active turbulent wake. Each of the outer tube configurations with an airfoil body 115 produces significantly smaller regions of high intensity turbulent flow than the cylindrical outer tube 112. As the relative thickness of the airfoils body 115 increases in moving from the NACA0020 to the NACA0040 profile, the intensity of the turbulent fluctuations increases. However, even the NACA0040 profile, which has turbulence levels approaching those of the cylinder in regions of the wake, has reduced turbulence levels near the outlet 119 of the outer tube 112, which has more impact on the droplet trajectories. In contrast, the NACA0020 cross section nearly eliminates all of the turbulence near the outlet 119 of the outer tube 112, and thus the NACA0020 profile is the preferred profile.

### List of reference numerals

- 101: liquid droplet production means
- 102: liquid droplet dispensing means
- 103: droplet generator
- 104: cooling means
- 105: cooling channel
- 106: mono-dispersed droplets
- 107: flow of cooling medium
- 108: inlet of cooling means
- 109: outlet of cooling means
- 110: volume of cooling means
- 111: wind tunnel upper wall
- 112: outer tube
- 113: tube-wall opening
- 114: entrainment flow into the outer tube through tube wall opening
- 115: airfoil body
- 116: gas (air) flow of the wind tunnel
- 117: airflow inside the outer tube
- 118: outlet of the inner tube
- 119: outlet of the outer tube
- 130: first end of outer tube
- 131: second end of outer tube, outlet of the outer tube
- 140: first end of inner tube, inlet of the inner tube
- 141: second end of inner tube, outlet of the inner tube
- 150: first end of the cooling channel
- 151: second end of the cooling channel equaling the outlet of the liquid droplet production means
- 160: inner tube
- 401: x-axis
- 402: y-axis
- 403: cross-section of the outlet of the outer tube
- 404, 405: intersections of droplet trajectories

## Claims

1. Apparatus suitable for dispensing monodispersed liquid droplets (106) into a gas flow (116), comprising:
- liquid droplet producing means (101) for producing monodispersed liquid droplets (106), said means (101) comprising an outlet (151) for the monodispersed liquid droplets (106); and
- dispensing means (102) comprising:
- an outer tube (112) having a length l1, a first end (140) and a second end (141), the second end (141) comprising a tube outlet (119);
- an inner tube (160) having a length l2 with l2 < l1, a first end (130) and a second end (131), the first end (130) comprising a tube inlet, the second end (131) comprising a tube outlet (118), wherein the inner tube (160) being arranged inside the outer tube (112) with the outer surface of the inner tube (160) being disposed at distance from the inner surface of the outer tube (112), the first end (140) of the outer tube (112) and the first end (130) of the inner tube (160) being co-located, the outlet (151) of the liquid droplet producing means (101) being connected to the tube inlet of the inner tube (160) such that the liquid droplets (106) being dispensed from the said means (101) into the inner tube (160) substantially along a center axis of the inner tube (160); **characterized in that**
a tube-wall-opening (113) being arranged on a downstream side of the outer tube (113), wherein the tube wall-opening (113) is extending along a center axis of the outer tube (112) from a distance d1a to a distance d1b, both distances d1a, d1b measured relative to the co-located first ends (130, 140) of the inner tube (160) and the outer tube (112) and with: d1b < l2 and d1a < d1b, and with the inner tube (160) and outer tube (113) being concentrically arranged along a common vertically arranged central axis.

2. Apparatus according to claim 1, wherein the liquid droplet producing means (101) is configured for producing and dispensing super-cooled liquid droplets (106) at a specified temperature.

3. Apparatus according to one of the claims 1 to 2, wherein the liquid droplet producing means (101) comprising:
- a liquid droplet generator (103) with an outlet for liquid droplets (106);
- a channel (105) having a length l3, a first end (150) and a second end (151), with the first end (150) of the channel (105) being connected to the outlet of the droplet generator such that the liquid droplets being dispensed from the said generator (103) into said channel (105) substantially along a center axis of the channel (105), and with the second end (151) of the channel (105) being the outlet of the liquid droplet producing means (101); and
- cooling means (104) in thermal contact with said channel (105) for cooling said channel (105).

4. Apparatus according to claim 3, wherein the cooling means (104) comprise a volume (110) encompassing at least a part of an outer surface of said channel (105), with the volume (110) having an inlet (108) and an outlet (109), and the volume (110), the inlet (108) and the outlet (109) being permeable for a cooling medium.

5. Apparatus according to one of the claims 1 to 4, wherein a profile of a cross-section of the outer tube is constant along the center axis of the outer tube.

6. Apparatus according to claim 5, wherein the cross-section of the outer tube (112) has a circular profile or a drop shaped profile or a symmetric shaped airfoil profile or a symmetric shaped NACA-profile.

7. Apparatus according to one of the claims 1 to 5, wherein the outer tube (112) comprises two portions:
- a first portion extending from the first end (140) of the outer tube (112) towards the second end (141) up to an outer tube (112) cross section located at a distance d2 from said first end (140), wherein the first portion encompassing the tube-wall-opening (113), and
- a second portion extending from said cross section to the second end (141) of the outer tube (112); the second portion comprising a body (115) having a cross section perpendicular to a center axis of the outer body (115), said cross section being a drop shaped profile, or a symmetric airfoil shaped profile, or a symmetric NACA-shaped profile.

8. Apparatus according to claim 7, wherein the NACA-shaped profile is a NACA0020, or NACA0030, or NACA 0040 profile.

9. Apparatus according to one of the claims 1 to 8, wherein l2 is selected from a range: [1.2 * d1b, 5 * d1b], [1.5 * d1b, 3.5 * d1b], or [2 * d1b, 2.5 * d1b].

10. Apparatus according to one of the claims 1 to 9, wherein l1 is selected from a range: [100 mm, 700 mm], [100 mm, 500 mm], [100 mm, 400 mm], [150 mm, 300 mm], or [150 mm, 250 mm].

11. Apparatus according to one of claims 1 to 10, wherein the ratio l2 / l1 is selected from the range: [0.1, 0.7], [0.1, 0.5], [0.1, 0.3], or [0.15, 2.25].

12. Apparatus according to one of the claims 1 to 11, wherein d1 a is selected from a range: [0, 50 mm], [0, 25 mm], [0, 10 mm], [0, 5 mm], [1 mm, 3 mm], [2 mm, 2.5 mm].

13. Wind tunnel with an apparatus according to one of the claims 1 to 12, wherein the apparatus being arranged at an upper wind-tunnel-wall located upstream of a test section of the wind tunnel with the outer tube (112) extending into the air flow (116).

## Patentansprüche

1. Vorrichtung, die sich zum Abgeben von monodispersen Flüssigkeitströpfchen (106) in einen Gasstrom (116) eignet, umfassend:
- ein Flüssigkeitströpfchenerzeugungsmittel (101) zum Erzeugen monodisperser Flüssigkeitströpfchen (106), wobei das Mittel (101) eine Austrittsöffnung (151) für die monodispersen Flüssigkeitströpfchen (106) umfasst; und
- Abgabemittel (102), umfassend:
- eine äußere Röhre (112) mit einer Länge l1, einem ersten Ende (140) und einem zweiten Ende (141), wobei das zweite Ende (141) eine Röhrenaustrittsöffnung (119) umfasst;
- eine innere Röhre (160) mit einer Länge l2, wobei l2 < 11, einem ersten Ende (130) und einem zweiten Ende (131), wobei das erste Ende (130) eine Röhreneintrittsöffnung umfasst, wobei das zweite Ende (131) eine Röhrenaustrittsöffnung (118) umfasst, wobei die innere Röhre (160) in der äußeren Röhre (112) angeordnet ist, wobei die Außenfläche der inneren Röhre (150) in einem Abstand zur Innenfläche der äußeren Röhre (112) angeordnet ist, wobei sich das erste Ende (140) der äußeren Röhre (112) und das erste Ende (130) der inneren Röhre (160) an derselben Stelle befinden, wobei die Austrittsöffnung (151) des Flüssigkeitströpfchenerzeugungsmittels (101) derart mit der Röhreneintrittsöffnung der inneren Röhre (160) verbunden ist, dass die Flüssigkeitströpfchen (106) aus dem Mittel (101) in die innere Röhre (160) im Wesentlichen entlang einer Mittelachse der inneren Röhre (160) abgegeben werden;
**dadurch gekennzeichnet, dass**
eine Röhrenwandöffnung (113) auf einer in Strömungsrichtung davor befindlichen Seite der äußeren Röhre (112) angeordnet ist, wobei die Röhrenwandöffnung (113) entlang einer Mittelachse der äußeren Röhre (112) von einem von einem Abstand d1a zu einem Abstand d1b verläuft, wobei beide Abstände d1a, d1b bezogen auf die an derselben Stelle befindlichen ersten Enden (130, 140) der inneren Röhre (160) und der äußeren Röhre (112) gemessen sind und wobei: d1b < 12 und d1a < d1b, und wobei die innere Röhre (160) und äußere Röhre (112) konzentrisch entlang einer gemeinsamen senkrecht angeordneten mittigen Achse angeordnet sind.

2. Vorrichtung nach Anspruch 1, wobei das Flüssigkeitströpfchenerzeugungsmittel (101) so ausgelegt ist, dass es unterkühlte Flüssigkeitströpfchen (106) mit einer vorgegebenen Temperatur erzeugt und abgibt.

3. Vorrichtung nach einem der Ansprüche 1 bis 2, wobei das Flüssigkeitströpfchenerzeugungsmittel (101) Folgendes umfasst:
- einen Flüssigkeitströpfchenerzeuger (103) mit einer Austrittsöffnung für Flüssigkeitströpfchen (106);
- einen Kanal (105) mit einer Länge 13, einem ersten Ende (150) und einem zweiten Ende (151), wobei das erste Ende (150) des Kanals (105) derart mit der Austrittsöffnung des Tröpfchenerzeugers verbunden ist, dass die Flüssigkeitströpfchen aus dem Erzeuger (103) in den Kanal (105) im Wesentlichen entlang einer Mittelachse des Kanals (105) abgegeben werden, und wobei das zweite Ende (151) des Kanals (105) die Austrittsöffnung des Flüssigkeitströpfchenerzeugungsmittels (101) ist; und
- Kühlmittel (104) in Wärmekontakt mit dem Kanal (105) zum Kühlen des Kanals (105).

4. Vorrichtung nach Anspruch 3, wobei die Kühlmittel (104) ein Volumen (110) umfassen, das mindestens einen Teil einer Außenfläche des Kanals (105) umgibt, wobei das Volumen (110) eine Eintrittsöffnung (108) und eine Austrittsöffnung (109) aufweist und das Volumen (110), die Eintrittsöffnung (108) und die Austrittsöffnung (109) für ein Kühlmittel durchlässig sind.

5. Vorrichtung nach einem der Ansprüche 1 bis 4, wobei ein Profil eines Querschnitts der äußeren Röhre entlang der Mittelachse der äußeren Röhre konstant ist.

6. Vorrichtung nach Anspruch 5, wobei der Querschnitt der äußeren Röhre (112) ein kreisförmiges Profil oder ein tropfenförmiges Profil oder ein symmetrisch geformtes Flügelprofil oder ein symmetrisch geformtes NACA-Profil aufweist.

7. Vorrichtung nach einem der Ansprüche 1 bis 5, wobei die äußere Röhre (112) zwei Abschnitte umfasst:
- einen ersten Abschnitt, der vom ersten Ende (140) der äußeren Röhre (112) in Richtung des zweiten Endes (141) bis zu einem Querschnitt der äußeren Röhre (112) verläuft, der sich in einem Abstand d2 vom ersten Ende (140) befindet, wobei der erste Abschnitt die Röhrenwandöffnung (113) umgibt, und
- einen zweiten Abschnitt, der von dem Querschnitt zum zweiten Ende (141) der äußeren Röhre (112) verläuft; wobei der zweite Abschnitt einen Körper (115) mit einem Querschnitt senkrecht zu einer Mittelachse des äußeren Körpers (115) aufweist, wobei der Querschnitt ein tropfenförmiges Profil oder ein symmetrisches flügelförmiges Profil oder ein symmetrisches NACA-Formprofil ist.

8. Vorrichtung nach Anspruch 7, wobei das NACA-Formprofil ein NACA0020- oder NACA0030- oder NACA0040-Profil ist.

9. Vorrichtung nach einem der Ansprüche 1 bis 8, wobei 12 ausgewählt ist aus einem Bereich: [1,2 * d1b, 5 * d1b], [1,5 * d1b, 3,5 * d1b] oder [2* d1b, 2,5 * d1b].

10. Vorrichtung nach einem der Ansprüche 1 bis 9, wobei 11 ausgewählt ist aus einem Bereich: [100 mm, 700 mm], [100 mm, 500 mm], [100 mm, 400 mm], [150 mm, 300 mm] oder [150 mm, 250 mm].

11. Vorrichtung nach einem der Ansprüche 1 bis 10, wobei das Verhältnis 12 / 11 ausgewählt ist aus dem Bereich: [0,1, 0,7], [0,1, 0,5], [0,1, 0,3] oder [0,15, 2,25].

12. Vorrichtung nach einem der Ansprüche 1 bis 11, wobei d1a ausgewählt ist aus einem Bereich: [0, 50 mm], [0, 25 mm], [0, 10 mm], [0, 5 mm], [1 mm, 3 mm], [2 mm, 2,5 mm].

13. Windkanal mit einer Vorrichtung nach einem der Ansprüche 1 bis 12, wobei die Vorrichtung an einer oberen Windkanalwand in Strömungsrichtung vor einem Prüfabschnitt des Windkanals angeordnet ist, wobei die äußere Röhre (112) in den Luftstrom (116) hinein verläuft.

## Revendications

1. Appareil approprié pour distribuer des gouttelettes de liquide monodispersées (106) dans un écoulement gazeux (116), comprenant :
- un moyen de production de gouttelettes de liquide (101) pour produire des gouttelettes de liquide monodispersées (106), ledit moyen (101) comprenant une sortie (151) pour les gouttelettes de liquide monodispersées (106) ; et
- un moyen de distribution (102) comprenant :
- un tube extérieur (112) ayant une longueur 11, une première extrémité (140) et une seconde extrémité (141), la seconde extrémité (141) comprenant une sortie de tube (119) ;
- un tube intérieur (160) ayant une longueur 12 avec 12 < 11, une première extrémité (130) et une seconde extrémité (131), la première extrémité (130) comprenant une entrée de tube, la seconde extrémité (131) comprenant une sortie de tube (118), dans lequel le tube intérieur (160) est agencé à l'intérieur du tube extérieur (112), la surface extérieure du tube intérieur (160) étant disposée à distance de la surface intérieure du tube extérieur (112), la première extrémité (140) du tube extérieur (112) et la première extrémité (130) du tube intérieur (160) étant co-situées, la sortie (151) du moyen de production de gouttelettes de liquide (101) étant connectée à l'entrée de tube du tube intérieur (160), de sorte que les gouttelettes de liquide (106) sont distribuées à partir dudit moyen (101) dans le tube intérieur (160) sensiblement le long d'un axe central du tube intérieur (160) ;
**caractérisé en ce que**
une ouverture de paroi de tube (113) étant agencée sur un côté aval du tube extérieur **(112),** dans lequel l'ouverture de paroi de tube (113) s'étend le long d'un axe central du tube extérieur (112) d'une distance d1a à une distance d1b, les deux distances d1a, d1b étant mesurées par rapport aux premières extrémités co-situées (130, 140) du tube intérieur (160) et du tube extérieur (112) et avec : d1b < 12 et d1a < d1b, et le tube intérieur (160) et le tube extérieur **(112)** étant agencés de manière concentrique le long d'un axe central commun agencé verticalement.

2. Appareil selon la revendication 1, dans lequel le moyen de production de gouttelettes de liquide (101) est configuré pour produire et distribuer des gouttelettes de liquide super-refroidies (106) à une température spécifiée.

3. Appareil selon l'une des revendications 1 à 2, dans lequel le moyen de production de gouttelettes de liquide (101) comprend :
- un générateur de gouttelettes de liquide (103) avec une sortie pour des gouttelettes de liquide (106) ;
- un canal (105) ayant une longueur 13, une première extrémité (150) et une seconde extrémité (151), la première extrémité (150) du canal (105) étant connectée à la sortie du générateur de gouttelettes de sorte que les gouttelettes de liquide sont distribuées à partir dudit générateur (103) dans ledit canal (105) sensiblement le long d'un axe central du canal (105), et la seconde extrémité (151) du canal (105) étant la sortie du moyen de production de gouttelettes de liquide (101) ; et
- un moyen de refroidissement (104) en contact thermique avec ledit canal (105) pour refroidir ledit canal (105).

4. Appareil selon la revendication 3, dans lequel le moyen de refroidissement (104) comprend un volume (110) englobant au moins une partie d'une surface extérieure dudit canal (105), le volume (110) ayant une entrée (108) et une sortie (109), et le volume (110), l'entrée (108) et la sortie (109) étant perméables pour un agent de refroidissement.

5. Appareil selon l'une des revendications 1 à 4, dans lequel un profil d'une section transversale du tube extérieur est constant le long de l'axe central du tube extérieur.

6. Appareil selon la revendication 5, dans lequel la section transversale du tube extérieur (112) a un profil circulaire ou un profil en forme de goutte, ou un profil en forme de profil aérodynamique symétrique, ou un profil en forme de NACA symétrique.

7. Appareil selon l'une des revendications 1 à 5, dans lequel le tube extérieur (112) comprend deux parties :
- une première partie s'étendant à partir de la première extrémité (140) du tube extérieur (112) vers la seconde extrémité (141), jusqu'à une section transversale de tube extérieur (112) située à une distance d2 de ladite première extrémité (140), dans lequel la première partie englobe l'ouverture de paroi de tube (113) et
- une seconde partie s'étendant à partir de ladite section transversale jusqu'à la seconde extrémité (141) du tube extérieur (112) ; la seconde partie comprenant un corps (115) ayant une section transversale perpendiculaire à un axe central du corps extérieur (115), ladite section transversale étant un profil en forme de goutte, ou un profil en forme de profil aérodynamique symétrique, ou un profil en forme de NACA symétrique.

8. Appareil selon la revendication 7, dans lequel le profil en forme de NACA est un profil NACA0020, NACA0030 ou NACA 0040.

9. Appareil selon l'une des revendications 1 à 8, dans lequel 12 est choisie parmi une gamme : [1,2 * d1b, 5 * d1b], [1,5 * d1b, 3.5 * d1b], ou [2 * d1b, 2,5 * d1b].

10. Appareil selon l'une des revendications 1 à 9, dans lequel 11 est choisie parmi une gamme : [100 mm, 700 mm], [100 mm, 500 mm], [100 mm, 400 mm], [150 mm, 300 mm], ou [150 mm, 250 mm].

11. Appareil selon l'une des revendications 1 à 10, dans lequel le rapport l2/l1 est choisi dans la gamme : [0,1, 0,7], [0,1, 0,5], [0,1, 0,3], ou [0,15, 2,25].

12. Appareil selon l'une des revendications 1 à 11, dans lequel d1a est choisie parmi une gamme : [0, 50 mm], [0, 25 mm], [0, 10 mm], [0, 5 mm], [1 mm, 3 mm], [2 mm, 2.5 mm].

13. Tunnel aérodynamique avec un appareil selon l'une quelconque des revendications 1 à 12, dans lequel l'appareil est agencé au niveau une paroi de tunnel aérodynamique supérieure située en amont d'une section de test du tunnel aérodynamique avec le tube extérieur (112) s'étendant dans le flux d'air (116).
